# EUROPÄISCHE PATENTANMELDUNG

(11) **EP 0 539 730 A2**
(43) Veröffentlichungstag der Anmeldung: **05.05.1993**
(21) Anmeldenummer: 92116384.6
(22) Anmeldetag: 24.09.1992
(51) Int. Cl.: B01D 46/30, B01D 46/34

(54) **Verfahren und Einrichtung zur Staubfilterung**

(30) Priorität: 28.10.1991 DE 4135331
(71) Anmelder: Jüngst, Dieter, W-8530 Neustadt a.d. Aisch (DE)
(72) Erfinder: Ohlmann, Rudolf, W-8531 Markt Erlbach (DE)

(57) **Zusammenfassung**

Durch ein Verfahren und eine Einrichtung soll bei staubbeladenen Heißgasen ein hoher Grad der Staubabscheidung ohne Brandgefahr erreicht werden. Es ist hierfür in einer Filterkammer(3) eine Schüttung aus hitzebeständigem, staubanlagerndem Granulat vorgesehen. Das staubbeladene Granulat ist über einzelne Verschlußorgane oder Gruppen von Verschlußorganen so austragbar, daß wechselweise höchstens einige, jedoch nicht alle Verschlußorgane in ihrer Öffnungsstellung stehen.

## Beschreibung

Die Erfindung betrifft ein Verfahren zur Filterung von staubbeladenen Gasen, insbesondere Heißgasen.

In der Landwirtschaft werden Trocknungsanlagen eingesetzt, um landwirtschaftliche Produkte zur Erhöhung deren Haltbarkeit zu Trocknen. Beispielsweise werden Gras, Rüben oder Kartoffeln getrocknet. Die Heißluft, der in der Trocknungsanlage die genannten Produkte ausgesetzt sind, belädt sich beim Überstreichen der Produkte mit Staub. Bisher wird die staubbeladene Heißluft über einen Kamin in die Umgebung entlassen. Dabei ergibt sich ein Staubausstoß, der wesentlich größer ist als 50 mg Staub/m³ Abgas. Die an sich bestehenden Vorschriften, die einen Staubaustrag von weniger als 50 mg Staub/m³ Abgas fordern, sind nicht eingehalten.

Zur Staubfilterung werden üblicherweise Gewebefilter als Taschenfilter oder als Schlauchfilter verwendet. Diese verstopfen schnell und lassen sich nicht ohne Betriebsunterbrechung abreinigen. Ein weiterer Nachteil solcher Staubfilter besteht bei der Filterung von Heißgasen darin, daß der Gewebefilter selbst und/oder der an diesem abgelagerte Staub sich entzünden können. Dies hat Anlageschäden und weitere Umweltbelastungen zur Folge.

In der DE 89 01 315 Ul ist eine Austragseinrichtung für das Filtermaterial in einem Luftfilter beschrieben. Es sind mehrere Filterkassetten vorgesehen, wobei jeder Filterkassette eine eigene Austragseinrichtung für das Filtermaterial zugeordnet ist. Es ist also keine einheitliche Filterkammer für das Filtermaterial gestaltet. Die zwischen den Filterkassetten bestehenden Trennwände bilden für das durchströmende Gas einen zusätzlichen Strömungswiderstand, was unerwünscht ist. Außerdem können die Trennwände durch Staub verstopfen, so daß die gewünschte Luftdurchlässigkeit nicht mehr gegeben ist.

Der Kassettenaufbau ist aufwendig und hat auch den Nachteil, daß sichergestellt werden muß, daß jede Kassette für sich beschickt werden kann.

In der DE 37 12 649 Cl ist ein Adsorber beschrieben, mit dem sich fluorwasserstoffhaltige Abgase reinigen lassen. Um den Kontakt zwischen dem Adsorptionsmittel und dem dieses durchströmenden Abgas zu verbessern, sind unten offene Gaskanäle in mehreren Ebenen angeordnet, wobei sich die Gaskanäle benachbarter Ebenen kreuzen. Verbrauchtes Adsorptionsmittel wird über eine Austragseinrichtung, beispielsweise eine Schurre, nach unten abgelassen. Beim Ablassen setzt sich das Adsorptionsmittel über den gesamten Querschnitt in Bewegung. Dies stört bei einem Adsorber nicht.

Aufgabe der Erfindung ist es, ein Verfahren und eine Einrichtung zur Staubfilterung anzugeben, wobei ein hoher Grad der Staubabscheidung gewährleistet sein soll und keine besondere Brandgefahr besteht.

Ein erfindungsgemäßes Verfahren zeichnet sich dadurch aus, daß eine Filterkammer mit einer Schüttung aus staubanlagerndem Granulat vollgehalten wird, daß das Rohgas durch das Granulat hindurchgeleitet wird und daß das staubbeladene Granulat wechselweise aus Teilzonen der Filterkammer nach unten abgelassen wird, wobei das staubbeladene Granulat in den jeweils anderen Teilzonen weitgehend unbewegt bleibt.

Der zusammen mit dem Gas, insbesondere der Heißluft, in die Filterkammer eintretende Staub lagert sich an dem Granulat ab. Ist das Granulat staubbeladen, dann wird es nach unten abgelassen. Es wird jedoch nicht Granulat über den gesamten Querschnitt der Filterkammer gleichzeitig nach unten abgelassen, sondern es wird immer nur eine Teilzone abgelassen. Das Granulat in der anderen Teilzone bleibt dabei unbewegt.

Es hat sich gezeigt, daß damit ein hoher Grad der Staubabscheidung im Dauerbetrieb erreicht wird. Dies läßt sich darauf zurückführen, daß in keinem Fall sich das staubbeladene Granulat über den gesamten Querschnitt der Filterkammer in Bewegung setzt. Der Zustand der Bewegung des staubbeladenen Granulats ist besonders kritisch, da durch die Bewegung des Granulats der angelagerte Staub aufgewirbelt wird und dann mit dem Gas ausgetragenen werden könnte. Da nach der Erfindung gleichzeitig immer nur eine Teilzone des Granulats sich in Bewegung setzt, wird in der Filterkammer nur wenig Staub verwirbelt. Das unbewegte Granulat kann etwa verwirbelten Staub aufnehmen.

Es hat sich gezeigt, daß sich bei der Erfindung ein Staubaustrag von weniger als 50 mg Staub/m³ Gas gewährleistet ist.

Ein weiterer Vorteil der Erfindung besteht darin, daß von dem Granulat keine Brandgefahr ausgeht.

Günstig ist vor allem auch, daß das staubbeladene Granulat chargenweise abgelassen wird, ohne daß der Filterbetrieb hierzu unterbrochen werden muß.

In Weiterbildung des Verfahrens wird das staubbeladene Granulat trocken vom Staub gereinigt und der Filterkammer erneut zugeführt.

Eine erfindungsgemäße Staubfiltereinrichtung zeichnet sich dadurch aus, daß eine Filterkammer, die einen Einlaß für das staubbeladene Rohgas und einen Auslaß für das entstaubte Gas aufweist, mit einer Schüttung aus Granulat eines hitzebeständigen, staubanlagernden Material gefüllt ist, daß am Boden der Filterkammer mehrere Auslaßöffnungen für das Granulat über den Boden verteilt vorgesehen sind, daß bei jeder Auslaßöffnung ein Verschlußorgan angeordnet ist, daß die Verschlußorgane einzeln oder in Gruppen aus ihrer Schließstellung in ihre Öffnungsstellung bringbar sind und daß zum Austrag von staubbeladenem Granulat wechselweise nur einzelne Verschlußorgane oder eine Gruppe von Verschlußorganen in die Öffnungsstellung gebracht sind, wobei die jeweils anderen Verschlußorgane in der Schließstellung stehen.

Diese Einrichtung hat die oben genannten Vorteile.

Weitere vorteilhafte Ausgestaltungen der Erfindung ergeben sich aus den Unteransprüchen und der folgenden Beschreibung. In der Zeichnung zeigen:

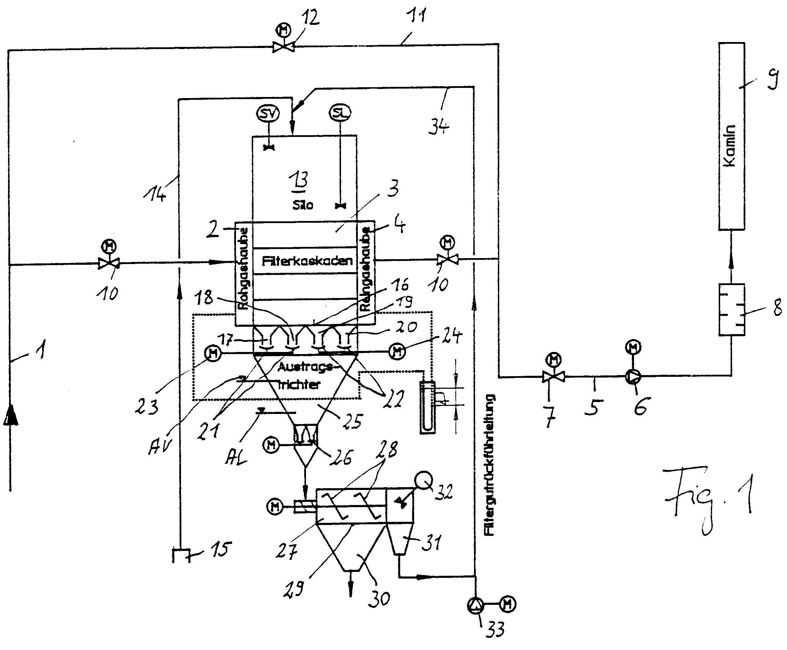

Figur 1 eine Anlage zur Filterung staubbeladener Heißgase schematisch,
Figur 2 eine gegenüber Figur 1 vergrößerte Teilansicht der Austragseinrichtung an der Filterkammer und
Figur 3 eine Aufsicht längs der Linie III-III nach Figur 2.

Durch eine Leitung(1) wird der Anlage staubbeladenes, heißes Rohgas zugeführt. Das Rohgas stammt beispielsweise aus einer Trocknungsanlage für landwirtschaftliche Produkte, beispielsweise Gras. Es kann auch aus einer Verbrennungsanlage von Klärschlamm stammen. Die Temperatur des Gases liegt typisch bei 250^{o}C, kann jedoch bis auf etwa 500^{o}C ansteigen. Die Leitung(1) ist an eine Rohgashaube(2) einer Filterkammer(3) angeschlossen. Die Filterkammer(3) ist mit einem hitzebeständigen, abriebfesten Granulat gefüllt. Die Körnung des Granulats liegt bei etwa 3 mm bis 8 mm. Als Granulat können beispielsweise gebrochenes Kalziumkarbonat, gewaschener Kies, Basaltschotter oder keramische Körper verwendet werden. Diese können beispielsweise die Form von Würfeln, Tetraedern, Zylindern oder Kugeln haben.

Ausgangsseitig ist an der Filterkammer(3) eine Reingashaube(4) angeordnet, die das entstaubte Gas in eine Leitung(5) führt. In der Leitung(5) ist ein Sauggebläse(6) angeordnet, das mittels Unterdruck das Gas durch die Filterkammer(3) saugt. Außerdem ist in der Leitung(5) ein Regelventil(7) angeordnet. Die Leitung(5) mündet über einen Schalldämpfer(8) in einen Kamin(9).

Beidseitig der Filterkammer(3) sind Absperrventile(10) vorgesehen. Eine Bypaßleitung(11), in der ebenfalls ein Absperrventil(12) vorgesehen ist, überbrückt die Filterkammer(3). Im regulären Filterbetrieb sind die Absperrventile(10) geöffnet und das Absperrventil(12) ist geschlossen. In Wartungsfällen oder in Störungsfällen läßt sich die Filterkammer(3) durch Schließen der Absperrventile(10) abschalten. Das Absperrventil(12) wird dann geöffnet, wodurch allerdings das Rohgas unentstaubt zum Kamin(9) gelangt.

Über der Filterkammer(3) ist ein Silo(13) angeordnet, der Granulat enthält und sicherstellt, daß die Filterkammer(3) im Filterbetrieb immer vollständig mit Granulat gefüllt ist. Würde die Filterkammer(3) teilweise kein Granulat enthalten, dann könnten Teilströme des Rohgases direkt von der Rohgashaube(2) in die Reingashaube(4) gelangen und würden dann unentstaubt austreten.

In den Silo(13) mündet eine Leitung(14), durch die Granulat in den Silo(13) nachgefüllt werden kann. Im Silo(13) sind zwei Füllstandsmesser(SL,SV) angeordnet. Sinkt das Niveau des Granulats im Silo(13) bis zum Füllstandsmesser(SL), dann liefert eine pneumatische Fördereinrichtung(15) Granulat durch die Leitung(14), bis der obere Füllstandsmesser(SV) anspricht und die Fördereinrichtung(15) abschaltet.

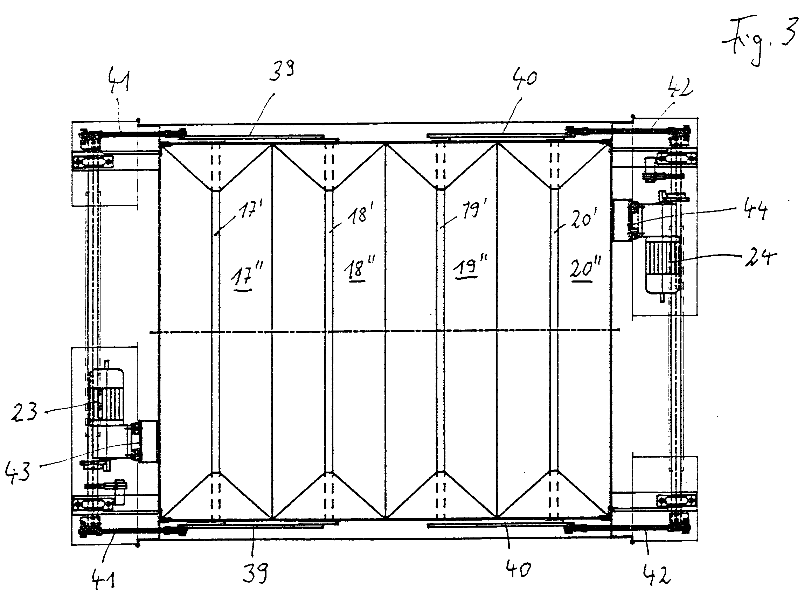

Am Boden(16) der Filterkammer(3) sind gleichmäßig verteilt mehrere Auslaßöffnungen(17 bis 20) vorgesehen. Im Beispielsfall sind vier schlitzförmige (vgl. Figur 3) Auslaßöffnungen(17 bis 20) vorgesehen. Jede der Auslaßöffnungen(17 bis 20) verjüngt sich trichterförmig nach unten, wobei die Trichterformen benachbarter Auslaßöffnungen direkt aneinander anschließen, so daß im wesentlichen der gesamte Querschnitt des Bodens(16) bzw. der Filterkammer(3) in die Auslaßöffnungen(17 bis 20) führt.

An jeder Auslaßöffnung(17 bis 20) ist ein Verschlußorgan(21 bzw. 22) vorgesehen. Die Verschlußorgane(21) der beiden Auslaßöffnungen(17,18) sind mechanisch miteinander gekoppelt und mittels eines Motors(23) betätigbar. Die Verschlußorgane(22) der beiden Auslaßöffnungen(19,20) sind ebenfalls miteinander mechanisch gekoppelt und mittels eines weiteren Motors(24) antreibbar.

Die Auslaßöffnungen(17 bis 20) münden unten in einen gemeinsamen Austragstrichter(25). In diesem sind ein unterer Füllstandsmesser(AL) und ein oberer Füllstandsmesser(AV) vorgesehen. Unten mündet der Austragstrichter(25) in eine Schleuse(26), die in ein Aggregat(27) führt, das vom staubbeladenen Granulat den Staub trennt. Beispielsweise handelt es sich um eine Sieb- bzw. Bürstmaschine mit motorisch angetriebenen Schlägern(28) und einem Siebboden(29), durch den der vom Granulat getrennte Staub in einen Sammler(30) gelangt. Eine trockene Reinigung des Granulats vom Staub ist günstig, weil dabei kein Wasser benötigt wird.

An das Aggregat(27) schließt eine Aufnahmekammer(31) für entstaubtes Granulat an. In dieser ist eine Staumeßeinrichtung(32) angeordnet, welche bei einem Stau das Aggregat(27) abschaltet.

An die Aufnahmekammer(31) ist eine pneumatische Rückfördereinrichtung(33) angeschlossen, die entstaubtes Granulat über eine Leitung(34) nach oben in den Silo(13) fördert.

Eine Differenzdruck-Meßeinrichtung(35) ist einerseits an die Rohgashaube(2) und andererseits an die Reingashaube(4) angeschlossen. Der entstehende Differenzdruck ist ein Maß für die Staubbeladung des Granulats in der Filterkammer(3). Erreicht der Differenzdruck einen oberen Grenzwert, dann werden die Verschlußorgane(21 oder 22) wechselweise, jedoch nicht gleichzeitig geöffnet.

Ist das Niveau des staubbeladenen Granulats im Austragstrichter(25) bis in die Höhe des oberen Füllstandsmessers(AV) angestiegen, dann werden alle Verschlußorgane(21,22) in ihre Schließstellung gebracht. Die Schleuse(26) öffnet und das Aggregat(27) schaltet ein, so daß staubbeladenes Granulat in das Aggregat(27) gelangt und dort vom Staub gereinigt wird.

Das abgereinigte Granulat wird mittels der Rückfördereinrichtung(33) in den Silo(13) gebracht.

Ist das Niveau des staubbeladenen Granulats im Austragstrichter(25) bis in die Höhe des Füllstandsmessers(AL) abgesunken, dann schließt die Schleuse(20) und das Aggregat(27) schaltet ab. Durch das Schließen der Schleuse(20) ist erreicht, daß der durch das Sauggebläse(6) erzeugte Unterdruck nicht dazu führen kann, daß Staub aus dem Austragstrichter(25) und insbesondere dem Aggregat(27) in die Filterkammer(3) zurückgesaugt werden kann.

Ist das Niveau des staubbeladenen Granulats im Austragstrichter(25) bis zum unteren Füllstandsmesser(AL) abgesunken, dann werden die Antriebe(23,24) der Verschlußorgane(21 bzw. 22) freigegeben, so daß die Verschlußorgane(21 bzw. 22) geöffnet werden können. Dieses Öffnen muß nicht unmittelbar danach erfolgen, sondern geschieht nach einer Verzögerungszeit oder dann, wenn sich eine entsprechende Staubbeladung des Granulats in der Filterkammer(3) vorliegt.

Mit der beschriebenen Anlage läuft das Entstaubungsverfahren im wesentlichen folgendermaßen ab:
Das staubbeladene Abgas wird durch das Granulat in der Filterkammer(3) gesaugt. Am Granulat lagert sich dabei der Staub an. Bei einer gewissen Staubbeladung des Granulats werden zunächst entweder die Verschlußorgane(21) mittels des Motors(23) oder die Verschlußorgane(22) mittels des Motors(24) aus ihrer Schließstellung in ihre Öffnungsstellung gebracht. Bei den in ihre Öffnungsstellung gebrachtet Verschlußorganen(21 bzw. 22) tritt staubbeladenes Granulat aus einer Teilzone des Gesamtvolumens der Filterkammer(3) aus. Das Granulat dieser Teilzone bewegt sich also unter Schwerkraftwirkung nach unten in den Austragstrichter(25). Da die anderen Verschlußorgane(22 bzw. 21) geschlossen bleiben, bleibt das über ihnen stehende staubbeladene Granulat zunächst in dieser Teilzone noch unbewegt, so daß keine für das staubbeladene Rohgas direkt offene Brücken zwischen der Rohgashaube(2) und der Reingashaube(4) entstehen. Das staubbeladene, abgelassene Granulat wird aus dem Silo(13) durch entstaubtes Granulat ersetzt. Anschließend wird dann die eine Gruppe der Verschlußorgane(21 bzw. 22) geschlossen und die andere Gruppe der Verschlußorgane(22 bzw. 21) wird geöffnet, so daß nun das staubbeladene Granulat aus dieser anderen Teilzone nach unten entlassen wird und diese Teilzone mit entstaubtem Granulat aus dem Silo(13) aufgefüllt wird.

Insgesamt ist es also möglich, das als Schüttschichtfilter wirkende Granulat gleichmäßig auszutragen, ohne daß die Filterwirkung beeinträchtigende Staubverwirbelungen entstehen. Dauerhaft unterschiedliche Staubkonzentrationen im Granulat sind vermieden. Das gesamte Granulat aus dem Volumen der Filterkammer(3) läßt sich chargenweise austragen, abreinigen und nachfüllen.

Um Kondensationserscheinungen zu vermeiden, die zu Verbackungen des staubbeladenen Granulats führen könnten, sind die Filterkammer(3) und der Austragstrichter(25) wärmetechnisch isoliert.

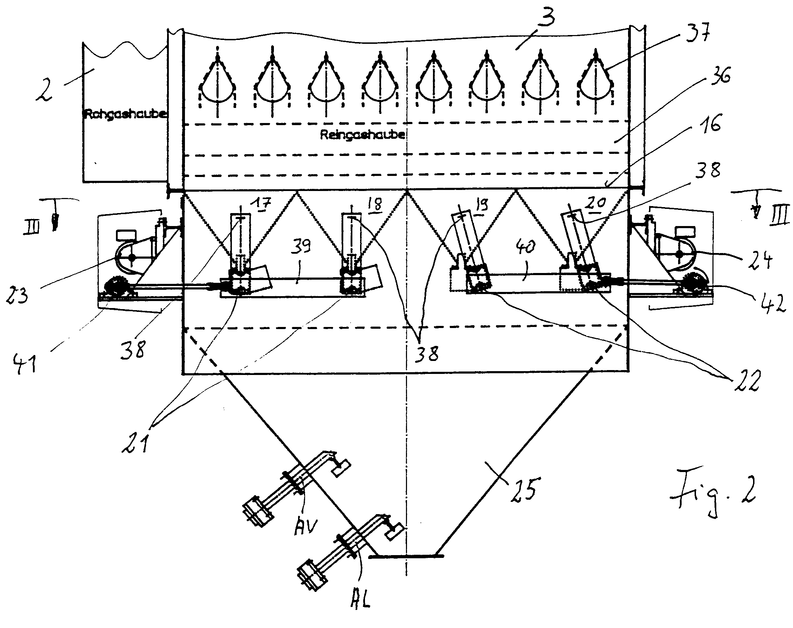

In den Figuren 2 und 3 ist der Aufbau der Filterkammer(3) in ihrem in den Austragstrichter(25) übergehenden Bereich näher dargestellt. In der Filterkammer(3) sind mehrere Ebenen sich kreuzender, nach unten offener, dachförmiger Gaskanäle(36,37) angeordnet. Die Figur 2 zeigt einen Gaskanal(36) in der unteren Ebene und die Gaskanäle(37) der nächst oberen Ebene. Die Gaskanäle(36) sind zur Rohgashaube(2) hin offen. Die Gaskanäle(37) sind zur Reingashaube(4) hin offen. Zwischen den Gaskanälen(36,37) befindet sich das Granulat. Das in die Gaskanäle(36) eintretende Rohgas verläßt diese nach unten, zieht durch das Granulat und tritt entstaubt unten in die Gaskanäle(37) und tritt aus diesen Gaskanälen(37) in die Reingashaube(4) ein.

Die Verschlußorgane(21,22) sind von Schurren gebildet. Diese sind an Pendelachsen(38) aus ihrer Öffnungsstellung in ihre Schließstellung schwenkbar gelagert. Die Schurren sind gruppenweise, speziell paarweise, mittels Bügeln (39,40) mechanisch miteinander gekoppelt. Die Bügel(39 bzw. 40) werden über Exzentergetriebe(41 bzw. 42) angetrieben, die mit den Motoren(23 bzw. 24) verbunden sind. Entschalter(43,44) schalten die Motore(23,24) in der Schließstellung bzw. Öffnungsstellung ab.

Die Auslaßöffnungen(17 bis 20) bilden angrenzend an die Schurren Auslaßschlitze(17',18',19',20'), die sich im wesentlichen über die gesamte Breite der Filterkammer(3) erstrecken (vgl. Figur 3). Der Boden(16) geht in Trichterformen(17'' bis 20'') sich verjüngend in die Auslaßschlitze(17' bis 20') über. Die in der Filterkammer(3) untersten Gaskanäle(36) erstrecken sich in ihrer Längsrichtung quer zur Längsrichtung der Auslaßschlitze(17' bis 20').

In Figur 2 sind die Verschlußorgane(22) bzw. Schurren in ihrer Öffnungsstellung gezeigt. Die Verschlußorgane(21) bzw. Schurren sind in ihrer Schließstellung dargestellt. In dieser Stellung sind die Auslaßschlitze(19',20') offen, so daß aus der oberhalb ihnen liegenden Teilzone der Filterkammer(3) staubbeladenes Granulat nach unten austritt, wogegen in der Teilzone oberhalb der von den Verschlußorganen(21,22) geschlossenen Auslaßschlitzen (17',18') das Granulat stillsteht.

Im Verfahrensablauf erfolgt nach der in Figur 2 dargestellten Stellung ein Schließen der Auslaßschlitze (19',20') und danach ein Öffnen der Auslaßschlitze (17',18').

Beim beschriebenen Ausführungsbeispiel ist eine mechanische Kopplung einer Gruppe von Verschlußorganen dargestellt, wobei jede Gruppe der Verschlußorgane mittels eines eigenen Motors angetrieben wird. Es wäre auch möglich, jedes Verschlußorgan mit einem eigenen Motor anzutreiben und die Motore dann so zu steuern, daß jeweils nur einzelne oder eine Gruppe von Verschlußorganen geöffnet wird.

Beim Ausführungsbeispiel ist vorgesehen, daß während einer längeren Zeit alle Verschlußorgane(21,22) in ihrer Schließstellung stehen. Es wäre jedoch auch möglich, die einzelnen Verschlußorgane(21,22) so zu betätigen, daß immer wenigstens ein Verschlußorgan, jedoch nicht alle Verschlußorgane in ihrer Öffnungsstellung stehen und die anderen Verschlußorgane sich in der Schließstellung befinden. In diesem Fall kann zum Antrieb aller Verschlußorgane ein einziger Motor genügen. In diesem Fall findet ein kontinuierlicher Abfluß von staubbeladenem Granulat über Teilzonen des Volumens der Filterkammer(3) bzw. deren Bodens(16) statt.

## Patentansprüche

1. Verfahren zur Filterung von staubbeladenen Gasen, insbesondere Heißgasen, beispielsweise für bei einer Trocknung von landwirtschaftlichen Produkten entstehende staubbeladene Heißgase, dadurch gekennzeichnet, daß eine Filterkammer(3) mit einer Schüttung aus staubanlagerndem Granulat vollgehalten wird, daß das Rohgas durch das Granulat hindurchgeleitet wird und daß das staubbeladene Granulat wechselweise aus Teilzonen der Filterkammer(3) nach unten abgelassen wird, wobei das staubbeladene Granulat in den jeweils anderen Teilzonen weitgehend unbewegt bleibt.

2. Verfahren nach Anspruch 1, dadurch gekennzeichnet, daß das staubbeladene Granulat trocken vom Staub gereinigt wird und der Filterkammer erneut zugeführt wird.

3. Staubfiltereinrichtung, insbesondere für staubbeladene Heißgase, beispielsweise für bei der Trocknung landwirtschaftlicher Produkte entstehende staubbeladene Heißgase, dadurch gekennzeichnet, daß eine Filterkammer(3), die einen Einlaß(2) für das staubbeladene Rohgas und einen Auslaß(4) für das Reingas aufweist, mit einer Schüttung aus Granulat eines hitzebeständigen, staubanlagernden Materials gefüllt ist, daß am Boden(16) der Filterkammer(3) mehrere Auslaßöffnungen(17 bis 20) für das Granulat über den Boden(16) verteilt vorgesehen sind, daß bei jeder Auslaßöffnung(17 bis 20) ein Verschlußorgan(21,22) angeordnet ist, daß die Verschlußorgane(21,22) einzeln oder in Gruppen aus ihrer Schließstellung in ihre Öffnungsstellung bringbar sind und daß zum Austrag von staubbeladenem Granulat wechselweise nur einzelne Verschlußorgane(21,22) oder eine Gruppe von Verschlußorganen(21,22) in die Öffnungsstellung gebracht sind, wobei die jeweils anderen Verschlußorgane(22,21) in der Schließstellung stehen.

4. Staubfiltereinrichtung nach Anspruch 3, dadurch gekennzeichnet, daß die Auslaßöffnungen(17 bis 20) in einen gemeinsamen Austragstrichter(25) münden.

5. Staubfiltereinrichtung nach Anspruch 3 oder 4, dadurch gekennzeichnet, daß die Auslaßöffnungen(17 bis 20) bzw. der Austragstrichter(25) an ein Aggregat(27) zur trockenen Abreinigung des staubbeladenen Granulats angeschlossen ist.

6. Staubfiltereinrichtung nach Anspruch 5, dadurch gekennzeichnet, daß das Aggregat(27) mit einem über der Filterkammer(3) angeordneten Silo(13) verbunden ist.

7. Staubfiltereinrichtung nach einem der vorhergehenden Ansprüche, dadurch gekennzeichnet, daß dem Austragstrichter(25) eine Schleuse(26) nachgeordnet ist, die ein Zurücksaugen von Staub in die Filterkammer(3) verhindert.

8. Staubfiltereinrichtung nach einem der vorhergehenden Ansprüche, dadurch gekennzeichnet, daß das staubanlagernde Granulat von Kalziumkarbonat, Kies, Schotter oder keramischen Körpern gebildet ist.

9. Staubfiltereinrichtung nach einem der vorhergehenden Ansprüche, dadurch gekennzeichnet, daß über der Filterkammer(3) ein Silo(13) mit Granulat angeordnet ist.
